# EUROPEAN PATENT APPLICATION

(11) **EP 0 983 782 A2**
(43) Date of publication of application: **08.03.2000**
(21) Application number: 99116950.9
(22) Date of filing: 27.08.1999
(51) Int. Cl.: A63F 13/10

(54) **Video game system, method of saving image, and recording medium with game program recorded therein**

(30) Priority: 01.09.1998 JP 26102998
(71) Applicant: Konami Co., Ltd., Kobe-shi, Hyogo 650-0046 (JP)
(72) Inventor: Kojima, Hideo, Tokyo 146-0085 (JP)
(74) Representative: Manitz, Finsterwald & Partner

(57) **Abstract**

A game system has a manual controller for producing a control signal in response to a manual control input from a game player, and a game execution unit and a graphic display unit for generating a game image which represents a game space based on the control signal from the manual controller and/or a predetermined sequence. The game system also has a JPEG image data generator for recording image data of the game image in a memory card based on the control signal from the manual controller.

## Description

The present invention relates to a game system capable of recording a game image in an external recording means, a method of saving an image, and a recording medium with a game program recorded therein.

There have been known in the art video game apparatus having a function to be able to replay a certain portion of a game image based on an instruction from a game program or a demand from a game player. For example, such a video game apparatus is disclosed in International Publication WO96/00601. The replay function can generate video game images that look like TV broadcast images by reproducing impressive scenes such as goal scenes in sports video games such as soccer games or the like, so that the game player will find the video games attractive and interesting over a long period of time.

In the conventional video game apparatus, however, the replayed images are for one-time use only, but cannot be saved for a long period of time and hence cannot be enjoyed again when the video game is played next time.

It is therefore an object of the present invention to provide a game system which is capable of saving a game image, over a long period of time, so that the game player will find the game played on the game system attractive and interesting, a method of saving an image, and a recording medium with a game program recorded therein.

According to the present invention, there is provided a game system comprising manual control input means for producing a control signal in response to a manual control input from a game player, image generating means for generating a game image which represents a game space based on the control signal and/or a predetermined sequence, and a principal game character maneuverable in the game space based on the control signal so as to select and be equipped with an item in the game space, and game image writing means for recording image data of the game image in an external storage medium based on the control signal when the principal game character is equipped with a predetermined item.

The manual control input means produces a control signal in response to a manual control input from a game player. The manual control input means is usually referred to as a manual controller or control panel. The manual control input means should preferably have a plurality of control members and outputs a plurality of control signals in response to operation of the control members.

The image generating means generates a game image which represents a game space based on the control signal and/or a predetermined sequence, and controls the progress of an entire game represented by the game image that is generated by the image generating means. The game represented by the game image that is generated by the image generating means is not limited to a particular game, but may be any known game such as an action game, a combat game, a role-playing game (RPG), a simulation game, a thinking-based game, etc.

The game space should preferably have a three-dimensional extent, but may have a two-dimensional extent. If the game space a three-dimensional extent, then the game image may be a pseudo-three-dimensional image in which a visual field produced by viewing the three-dimensional game space from a given viewpoint and in a given viewing direction is projected onto a certain plane, or may be an image generated by preparing two-dimensional images of objects and a background in the game space and writing the prepared two-dimensional images in predetermined positions.

The game image writing means records image data of the game image in an external storage medium based on the control signal when the principal game character is equipped with a predetermined item. The image data may comprise image data of a still game image or image data of a moving game image that is generated by the image generating means for a certain period of time. When the principal game character is equipped with a predetermined item, the game image writing means records the image data of the still game image exactly when or a certain time delay after the control signal arrives from the manual control input means.

The image data may be recorded in the external storage means in any desired format. If the image data is still image data, then it may be recorded in a BPM, GIF, or JPEG format. If the image data is moving image data, then it may be recorded in a general format such as a MPEG or Moving JPEG format, or in a dedicated format.

The external storage medium may comprise a nonvolatile recording medium, and may be removably connected to the game image writing means.

Specifically, the external storage medium may be any storage medium insofar as it can record image data. For example, the external storage medium may comprise a recordable/write-once-read-many storage medium such as a semiconductor memory card, a magnetic memory card, a magnetic disk, a magneto-optical disk, an optical disk, etc. The game player may remove the external storage medium and connect it to another game system to view the game image stored in the external storage medium.

Though the external storage medium should preferably comprise a nonvolatile recording medium, it may be any recording medium insofar as it can hold recorded image data beyond one playing session of the game image generated by the image generating means.

When the game player operates the manual control input means to save the game image, the game image writing means records the image data of the game image in the external storage medium. Consequently, the game player will be able to view the saved game image at any time.

The game system may further comprises viewpoint setting means for determining a viewpoint and/or a viewing direction within the game space to generate the game image based on the control signal, the image generating means comprising means for generating the game image as viewed from the viewpoint and/or in the viewing direction determined by the viewpoint setting means, and the game image writing means comprising means for recording image data of the game image as viewed from the viewpoint and/or in the viewing direction determined by the viewpoint setting means, in the external storage medium.

When the game player operates the manual control input means to control the viewpoint setting means to determine a viewpoint and/or a viewing direction, the game image writing means records image data of the game image as viewed from the viewpoint and/or in the viewing direction determined by the viewpoint setting means, in the external storage medium. Accordingly, the game player can record the image data of the game image as viewed from the viewpoint and/or in the viewing direction in the external storage medium.

Alternatively, the game system may further comprise viewpoint setting means for determining a viewpoint at the present position of the principal game character in the game space and a viewing direction aligned with the line of sight of the principal game character based on the control signal, the image generating means comprising means for generating a game image as viewed from the viewpoint and in the viewing direction determined by the viewpoint setting means, and the game image writing means comprising means for recording image data of the game image as viewed from the viewpoint and in the viewing direction determined by the viewpoint setting means, in the external storage medium.

When the game player operates the manual control input means to control the viewpoint setting means determine a viewpoint at the present position of the principal game character in the game space and a viewing direction aligned with the line of sight of the principal game character, the game image writing means records image data of the game image as viewed from the viewpoint and/or in the viewing direction determined by the viewpoint setting means, in the external storage medium. Accordingly, the game player can record the image data of the game image as viewed from the viewpoint and/or in the viewing direction in the external storage medium.

The game system may further comprises object data memory means for storing an object to be displayed in the game space, as polygons, the image generating means comprising means for placing the object stored by the object data memory means in a given position in the game space based on the control signal and/or the predetermined sequence, and generating a pseudo-two-dimensional game image representing a game space as viewed from the viewpoint and/or in the viewing direction determined by the viewpoint setting means. The game image writing means may comprise data compressing means for compressing image data of the game image, and means for writing the image data compressed by the data compressing means in the external storage medium. The data compressing means may comprise means for compressing the image data of the game image according to a JPEG compression process. The image data compressed according to the JPEG compression process may further be compressed by a known, compression algorithm. The data compressing means may compress the image data according to a reversible or irreversible compression routine. With the image data being compressed for storage, a number of image data can be stored in the external storage medium which has a limited storage capacity. Alternatively, the image data may be stored in an uncompressed form.

The game image writing means may comprise means for recording still image data of the game image in the external storage medium when the control signal is produced from the manual control input means.

The game image writing means may comprise means for recording index data for identifying the image data of the game image in relation to the image data in the external storage medium. At least a portion of the index data may be generated by the control signal.

The index data may represent the title of the image data, the date of generation of the image data, the name of the game player, the name of the game, etc. The index data may be generated by the control signal which is produced by the manual control input means when operated by the game player. If at least a portion of the index data may be generated by the control signal, then the index data may contain a statement such as a comment which the game player can freely enter in connection with the image data.

Since the index data for identifying the image data of the game image is recorded in relation to the image data in the external storage medium, individual image data can easily be identified when the game player subsequently views the image data. Particularly, if at least a portion of the index data is generated by the control signal, then the game player can generate arbitrary index data for easier identification of the individual image data.

According to the present invention, there is also provided a game system comprising manual control input means for producing a control signal in response to a manual control input from a game player, image generating means for generating a game image which represents a game space based on at least one of the control signal and a predetermined sequence, and a principal game character maneuverable in the game space based on the control signal so as to select and be equipped with an item in the game space, display means for displaying the game image generated by the image generating means, game image writing means for recording image data of the game image in a storage medium based on the control signal when the principal game character is equipped with a predetermined item, and game image playback means for displaying the image data recorded in the storage medium on the display means based on the control signal.

The display means displays the game image generated by the image generating means for the game player to see. The display means may comprise a known display unit insofar as it allows the game player to visually recognize the displayed game image. For example, the display means may be a CRT, a liquid crystal display unit, a plasma display unit, or the like.

According to the present invention, there is also provided a method of saving an image in a game system having manual control input means for producing a control signal in response to a manual control input from a game player, and image generating means for generating a game image which represents a game space based on the control signal and/or a predetermined sequence, and a principal game character maneuverable in the game space based on the control signal so as to select and be equipped with an item in the game space, the method comprising the step of recording image data of the game image in an external storage medium based on the control signal when the principal game character is equipped with a predetermined item.

The method may further comprise the steps of determining a viewpoint and/or a viewing direction within the game space to generate the game image based on the control signal, generating the game image as viewed from the viewpoint and/or in the viewing direction, and recording image data of the game image as viewed from the viewpoint and/or in the viewing direction in the external storage medium.

Alternatively, the method may further comprise the steps of determining a viewpoint at the present position of the principal game character in the game space and a viewing direction aligned with the line of sight of the principal game character based on the control signal, generating a game image as viewed from the viewpoint and in the viewing direction, and recording image data of the game image as viewed from the viewpoint and in the viewing direction in the external storage medium.

According to the present invention, there is further provided a recording medium which stores a game program for use in a game system having manual control input means for producing a control signal in response to a manual control input from a game player, and image generating means for generating a game image which represents a game space based on the control signal and/or a predetermined sequence, and a principal game character maneuverable in the game space based on the control signal so as to select and be equipped with an item in the game space, wherein when the game program is read by the game system, the game program enables the game system to record image data of the game image in an external storage medium based on the control signal when the principal game character is equipped with a predetermined item.

The game program may enable the game system to determine a viewpoint and/or a viewing direction within the game space to generate the game image based on the control signal, generate the game image as viewed from the viewpoint and/or in the viewing direction, and record image data of the game image as viewed from the viewpoint and/or in the viewing direction in the external storage medium.

Alternatively, the game program may enable the game system to determine a viewpoint at the present position of the principal game character in the game space and a viewing direction aligned with the line of sight of the principal game character based on the control signal, generate a game image as viewed from the viewpoint and in the viewing direction, and record image data of the game image as viewed from the viewpoint and in the viewing direction in the external storage medium.

According to the present invention, there is also provided a game system comprising manual control input means for producing a control signal in response to a manual control input from a game player, image generating means for generating a game image which represents a game space based on the control signal and/or a predetermined sequence, and a principal game character maneuverable in the game space based on the control signal, viewpoint setting means for determining a viewpoint at the present position of the principal game character in the game space and a viewing direction aligned with the line of sight of the principal game character based on the control signal, the image generating means comprising means for generating a game image as viewed from the viewpoint and in the viewing direction determined by the viewpoint setting means, and game image writing means for recording image data of the game image as viewed from the viewpoint and in the viewing direction determined by the viewpoint setting means in an external storage medium based on the control signal.

According to the present invention, there is also provided a game system comprising manual control input means for producing a control signal in response to a manual control input from a game player, image generating means for generating a game image which represents a game space based on the control signal and/or a predetermined sequence, and a principal game character maneuverable in the game space based on the control signal, display means for displaying the game image generated by the image generating means, viewpoint setting means for determining a viewpoint at the present position of the principal game character in the game space and a viewing direction aligned with the line of sight of the principal game character based on the control signal, the image generating means comprising means for generating a game image as viewed from the viewpoint and in the viewing direction determined by the viewpoint setting means, game image writing means for recording image data of the game image as viewed from the viewpoint and in the viewing direction determined by the viewpoint setting means in a storage medium based on the control signal, and game image playback means for displaying the image data recorded in the storage medium on the display means based on the control signal.

According to the present invention, there is further provided a method of saving an image in a game system having manual control input means for producing a control signal in response to a manual control input from a game player, and image generating means for generating a game image which represents a game space based on the control signal and/or a predetermined sequence, and a principal game character maneuverable in the game space based on the control signal, the method comprising the steps of determining a viewpoint at the present position of the principal game character in the game space and a viewing direction aligned with the line of sight of the principal game character based on the control signal, generating a game image as viewed from the viewpoint and in the viewing direction, and recording image data of the game image as viewed from the viewpoint and in the viewing direction in an external storage medium based on the control signal.

According to the present invention, there is further provided a recording medium which stores a game program for use in a game system having manual control input means for producing a control signal in response to a manual control input from a game player, and image generating means for generating a game image which represents a game space based on the control signal and/or a predetermined sequence, and a principal game character maneuverable in the game space based on the control signal, wherein when the game program is read by the game system, the game program enables the game system to determine a viewpoint at the present position of the principal game character in the game space and a viewing direction aligned with the line of sight of the principal game character based on the control signal, generate a game image as viewed from the viewpoint and in the viewing direction, and record image data of the game image as viewed from the viewpoint and in the viewing direction in an external storage medium.

The above and other objects, features, and advantages of the present invention will become more apparent from the following description when taken in conjunction with the accompanying drawings in which preferred embodiments of the present invention are shown by way of illustrative example.
FIG. 1 is a block diagram of a hardware arrangement of a game system according to the present invention;
FIG. 2 is a block diagram of functions of the game system according to the present invention;
FIGS. 3 through 5 are a flowchart of an operation sequence of the game system;
FIGS. 6 through 8 are a flowchart of a camera equipping process;
FIG. 9 is a flowchart of a camera image capturing process;
FIGS. 10(a) through 10(i) are diagrams illustrative of a JPEG compression process;
FIG. 11 is a view of a displayed game image of the game system;
FIG. 12 is a view of another displayed game image of the game system;
FIG. 13 is a view of still another displayed game image of the game system;
FIG. 14 is a view of yet another displayed game image of the game system; and
FIG. 15 is a view of yet still another displayed game image of the game system.

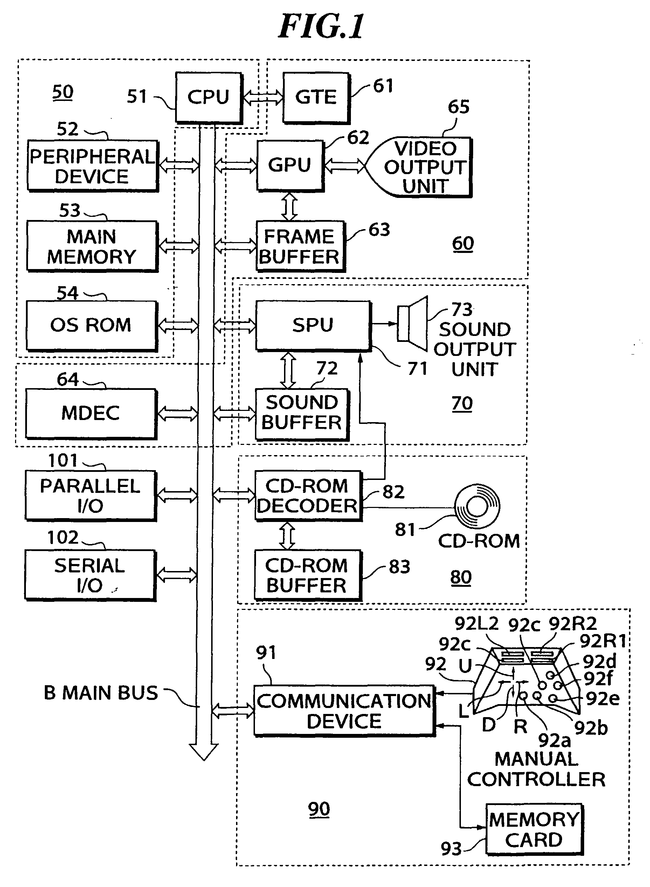

A game system according to the present invention reads and executes game program data from an optical disk such as a CD-ROM or the like for displaying a video game in accordance with commands from a user, i.e., a game player, as disclosed in Japanese laid-open patent publication No. 8-212377. Specifically, the game system has a hardware arrangement as shown in FIG. 1.

As shown in FIG. 1, the game system generally comprises a control system 50 for controlling the game system in its entirety, a graphic system 60 for handling image data, a sound system 70 for handling sound data, an optical disk controller 80 for reading data from an optical disk such as a CD-ROM and generating instructions to decode the read data, a communication controller 90 for controlling user's commands and stored game settings, and a main bus B interconnecting these systems and controllers.

The control system 50 includes a main memory 53 such as a 2-Mbyte RAM for storing three-dimensional image data read from a CD-ROM. The graphic system 60 includes a frame buffer 63 for storing a color information table, texture pattern information, semitransparency ratio designating data, etc. as characteristic data indicated for each of polygons of images to be displayed, and a geometry transfer engine (GTE) 61 as a coordinate transforming means for converting three-dimensional image data into two-dimensional image data through perspective transformations. The control system 50 also includes a central processing unit (CPU) 51 as a graphic command generating means for generating packetized graphic commands for respective polygons by combining the two-dimensional image data with information that specifies characteristics of the polygons. The graphic system 60 also includes a graphics processing unit (GPU) 62 for generating and storing two-dimensional image information based on characteristic data designated by the generated graphic commands into the frame buffer 63, such as a 1-Mbyte frame buffer, and a video output unit 65 such as a display unit for reading two-dimensional image information from the frame buffer 63 in synchronism with a television synchronizing signal and displaying the two-dimensional image information on its display screen.

The control system 50 further includes a peripheral device controller 52 for controlling interrupts, time control processes, and data transfer according to memory control direct memory access (DMA), and a ROM 54 such as a 512-Kbyte ROM for storing an operating system for controlling the main memory 53, the graphic system 60, and the sound system 70.

The CPU 51 may comprise a 32-bit RISC (Reduced Instruction-Set Computer) CPU, for example, and serves to control the game system as a whole by executing the operating system stored in the ROM 54. The CPU 51 has a command cache memory and a scratch pad memory, and effects real-memory management.

The GTE 61 comprises a coordinate-calculating coprocessor for effecting coordinate transformations on image data stored in the main memory 53. The graphic system 60 further includes an image decoder (MDEC) 64 for decoding image data that have been compressed and encoded by orthogonal transformations such as discrete cosine transformations.

The GTE 61 has a parallel calculating function for carrying out a plurality of calculations parallel to each other. The GTE 61 serves as a coprocessor for the CPU 51 and effects at high speeds coordinate transformations such as perspective transformations, light source calculations by calculating inner products of normal vectors and light source vectors, and calculations of matrices and vectors in the fixed-point representation, in response to calculation requests from the CPU 51.

Specifically, when the GTE 61 carries out calculations for a flat shading process for displaying each triangular polygon with the same color, the GET 61 can effect coordinate transformations for a maximum of about 1500 thousand polygons per second. The image processing system, therefore, reduces the burden on the CPU 51 and can effect coordinate transformations at high speed. Each of the polygons is a minimum graphic unit used to construct three-dimensional objects on the display screen of the display unit, and may have a polygonal shape such as a triangular shape, a quadrangular shape, or the like.

The GPU 62 operates according to polygon graphic commands from the CPU 51 to generate and store polygons, etc. into the frame buffer 63. The GPU 62 is capable of generating a maximum of about 360 thousand polygons per second. The GPU 62 has a two-dimensional address space independent of the CPU 51, and the frame buffer 63 is mapped onto the two-dimensional address space.

The frame buffer 63 comprises a so-called dual-port RAM for simultaneously transferring graphic data from the GPU 62 or data from the main memory 53, and reading data from itself for display. The frame buffer 63 has a 1-Mbyte storage capacity, for example, as described above, and stores a matrix of 1024 horizontal pixels × 512 vertical pixels each of 16 bits. Data contained in any arbitrary display area of the frame buffer 63 can be outputted to the video output unit 65.

The frame buffer 63 has, in addition to the display areas for storing image data to be outputted to the video output unit 65, a CLUT area (second area) for storing a color lookup table (CLUT) to be referred to when the GPU 62 generates polygons, and a texture area (first area) for storing texture data to be mapped into polygons that are generated by the GPU 62. The CLUT area and the texture area are dynamically variable as the display areas change. The frame buffer 63 allows image data stored in the display areas to be accessed while they are being displayed and also can transfer data in a quick DMA mode between itself and the main memory 53.

The GPU 62 is capable of effecting, in addition to the flat shading process, a Gouraud shading process for interpolating the colors of vertices of polygons into colors in the polygons, and a texture mapping process for mapping texture data stored in the texture area onto the polygons.

For carrying out the Gouraud shading process or the texture mapping process, the GTE 61 is able to effect coordinate calculations for a maximum of about 500 thousand polygons per second.

The MDEC 64 is controlled by the CPU 51 to decode image data of still images or moving images which have been read from the CD-ROM and stored in the main memory 53, and store decoded image data back into the main memory 53. Specifically, the MDEC 64 can effect inverse discrete cosine transforms (IDCTs) at high speed to expand compressed data read from the CD-ROM, the data being compressed according to a color still image compression standard (so-called "JPEG") or a moving image compression standard (so-called "MPEG", by way of interframe compression only according to the embodiment).

The decoded image data is stored through the GPU 62 into the frame buffer 63 for use as background images for images that are generated by the GPU 62.

The sound system 70 comprises a sound processing unit (SPU) 71 for generating music sounds, effect sounds, etc. according to commands from the CPU 51, a sound buffer 72 having a storage capacity of 512 Kbytes, for example, for storing sound data such as of voices, music sounds, etc. and sound source data read from the CD-ROM, and a sound output unit 73 such as a loudspeaker for outputting music sounds, effect sounds, etc. generated by the SPU 71.

The SPU 71 has an ADPCM decoding function for decoding sound data which has been encoded as a 4-bit differential signal from 16-bit sound data by ADPCM (adaptive differential pulse-code modulation), a reproducing function for reproducing sound source data stored in the sound buffer 72 into effect sounds, and a modulating function for modulating and reproducing sound data stored in the sound buffer 72. The SPU 71 is capable of automatically converting operation parameters with looping and time coefficients, has an ADPCM source capable of producing 24 voices, and operates under the control of the CPU 51. The SPU 71 manages a address space of its own onto which the sound buffer 72 is mapped, and transfers ADPCM data from the CPU 51 to the sound buffer 72, and directly transfers key-on/key-off and demodulation information for reproducing the data.

The sound system 70 thus constructed can be used as a so-called sampling sound source for generating music sounds, effect sounds, etc. based on the data stored in the sound buffer 72.

The optical disk controller 80 comprises a disk drive 81 for reproducing a video game program and data recorded in an optical disk which typically comprises a CD-ROM, a decoder 72 for decoding the video game program and data which have been recorded together with an error correcting code, and a buffer 83 having a storage capacity of about 32 Kbytes for temporarily storing reproduced data from the disk drive 81. The optical disk controller 80 supports various disk formats including CD-DA, CD-ROM, XA, etc. The decoder 82 also serves as part of the sound system 70.

Sound data recorded on a disk played back by the disk drive 81 may be ADPCM data such as CD-ROM or XA ADPCM data, or PCM data in the form of digital sound signals converted from analog signals.

If the recorded sound data comprises ADPCM data in the form of a 4-bit differential signal encoded from 16-bit sound data, for example, then the sound data is error-corrected and decoded by the decoder 82, and the decoded sound data is supplied to the SPU 71, which converts the digital sound data into analog sound data that are supplied to the loudspeaker 73.

If the recorded sound data comprises 16-bit PCM digital data, for example, then the sound data is decoded by the decoder 82, and the decoded sound data is supplied to the SPU 71. The sound data is mixed with an output signal from the SPU 71, and the mixed sound data is transmitted through a reverberation unit which generates a final audio output signal.

The communication controller 90 comprises a communication control device 91 for controlling communications with the CPU 51 through the main bus B, a manual controller 92 for entering commands from the game player, and a memory card 93 for storing game settings and results.

The manual controller 92 serves as an interface for transmitting the will of the game player to the application , and has various keys described below. The manual controller 92 is controlled by the communication control device 91 to transmit key states about 60 times per second to the communication control device 91 according to a synchronous communication process. The communication control device 91 then transmits the key states from the manual controller 92 to the CPU 51. The manual controller 92 has two connectors and a multiple-pin tap. Therefore, a number of manual controllers 92 can be connected to the game system. Commands from the game player are supplied through the manual controller 92 to the CPU 51, which effects various processing operations based on the supplied commands according to the video game program which is being executed.

The manual controller 92 has cross keys including a left key L, a right key R, an up key U, and a down key D, a first left button 92L1, a second left button 92L2, a first right button 92R1, a second right button 92R2, a start button 92a, a select button 92b, a first button 92c, a second button 92d, a third button 92e, and a fourth button 92f. The cross key allows the game player to give up, down, left, and right direction commands to the CPU 51. When the game player presses the start button 92a, it instructs the CPU 51 to start the video game program that is read and loaded from a CD-ROM in the disk drive 81 into the main memory 53. The select button 92b permits the game player to make and indicate various selections with respect to the video game program loaded from the CD-ROM into the main memory 53, to the CPU 51.

When it is necessary store settings of the game being executed or results of the game at the end of the game or while the game is in progress, the CPU 51 transmits the data of the settings or results to the communication control device 91, which stores the data into the memory card 93. The memory card 93 is connected to the communication control device 91, but not to the main bus B, and hence can be attached and detached while the game system is being energized. This allows various game settings and results to be stored in a plurality of memory cards 93.

The game system shown in FIG. 1 also has a 16-bit parallel input/output (I/O) port 101 connected to the main bus B, and an asynchronous serial input/output (I/O) port 102 connected to the main bus B. The parallel input/output (I/O) port 101 allows the game system to be connected to peripheral devices. The serial input/output (I/O) port 102 allows the game system to communicate with another game system.

The main memory 53 is required to transfer a large amount of image data at high speed between itself and the CPU 62, the MDEC 64, and the decoder 82 when reading the video game program, displaying images, and generating graphic data. To meet such requirements, the game system can operate in a DMA data transfer mode for directly transferring data between the main memory 53, the GPU 62, the MDEC 64, and the decoder 82 under the control of the peripheral device controller 52 rather than the CPU 51. This can reduce the burden imposed on the CPU 51 for the transfer of the data, and can transfer the data at high speed.

When the game system is turned on, the CPU 51 executes the operating system stored in the ROM 54. When the operating system is executed, the CPU 51 initializes the game system as a whole by confirming its operation, and thereafter controls the optical disk controller 80 to read, load, and execute the video game program recorded in an optical disk such as a CD-ROM. When the video game program is executed, the CPU 51 controls the graphic system 60 and the sound system 70 depending on commands entered by the game player to display images and generate effect sounds and music sounds.

Displaying images on the video output unit 65 will be described below.

The GPU 62 displays data stored in an arbitrary rectangular area of the frame buffer 63 on the display screen of the video output unit 65 such as a CRT or the like. The rectangular area will hereinafter be referred to as a "display area". The display area may have a size selected according to a mode that has been selected. For example, when a mode 0 is selected, the display area has a size of 256 (H) × 240 (V) (noninterlaced), and when a mode 9 is selected, the display area has a size of 384 (H) × 480 (V) (interlaced). Therefore, it is possible to designate a display start position and a display end position independently for horizontal and vertical positions on the display screen. Ranges of values that can be designated for coordinates in different modes are as follows: In modes 0 and 4, horizontal coordinates can be designated in a range from 0 to 276 (coordinates for the horizontal display start position) and in a range from 4 to 280 (coordinates for the horizontal display end position). In modes 8 and 9, horizontal coordinates can be designated in a range from 0 to 396 (coordinates for the horizontal display start position) and in a range from 4 to 400 (coordinates for the horizontal display end position). In modes 0 through 3 and 8, vertical coordinates can be designated in a range from 0 to 240 (coordinates for the vertical display start position). In modes 4 through 7 and 9, vertical coordinates can be designated in a range from 4 to 484 (coordinates for the vertical display end position). Consequently, a minimum displayed image size on the display screen is 4 horizontal pixels × 2 vertical pixels (noninterlaced) or 4 pixels (interlaced).

The GPU 62 supports two modes with respect to the number of displayable colors, i.e., a 16-bit direct mode (32768 colors) and a 24-bit direct mode (full colors). The 16-bit direct mode (hereinafter referred to as a "16-bit mode") is a 32768-color display mode. In the 16-bit mode, the number of displayable colors is smaller than in the 24-bit direct mode (hereinafter referred to as a "24-bit mode"). Since the GPU 62 calculates colors with 24 bits for generating images and has a dither function for increasing the number of gradations, it can display images in a quasi-full-color (24-bit color) display mode. The 24-bit mode is a 26777216-color (full-color) display mode. In the 24-bit mode, it is only possible to display image data (bit-map data) transferred to the frame buffer 63, and the function of the GPU 62 to generate images cannot be performed. One pixel has a bit length of 24 bits. However, coordinates and display positions on the frame buffer 63 need to be specified in terms of 16 bits. Specifically, 24-bit image data of 640 × 480 is handled as image data of 960 × 480 in the frame buffer 63. It is necessary to establish coordinates for the horizontal display end position as multiples of 8. In the 24-bit mode, therefore, a minimum displayed image size on the display screen is 8 horizontal pixels × 2 vertical pixels.

The GPU 62 has various graphic data generating functions as described below. The GPU 62 has a polygon or sprite generating function to generate polygons or sprites whose sizes range from 1 × 1 dots to 256 × 256 dots based on a 4-bit CLUT (4-bit mode, 16 colors/polygon, sprite), an 8-bit CLUT (8-bit mode, 256 colors/polygon, sprite), and a 16-bit CLUT (16-bit mode, 32763 colors/polygon, sprite), a polygon generating function to effect a flat shading process for generating polygons and sprites with screen coordinates specified for their vertices and coloring facets of the polygons and sprites with one color, a Gouraud shading process for specifying different colors for the respective vertices and generating gradations for facets of the polygons and sprites, and a texture mapping process for preparing and mapping texture patterns (those texture patterns for use on sprites are called sprite patterns) of two-dimensional image data onto facets of the polygons and sprites, a linear graphic data generating function to generate gradations, and an image transfer function to transfer image data from the CPU 51 to the frame buffer 63. The GPU 62 also has other functions including a function to calculate an average of pixels of an image to make the image semitransparent, an α-blending function to mix pixel data at a given ratio of α, a dither function to apply noise to boundaries of colors, a graphic clipping function not to display an area beyond a graphic display area, and an offset indicating function to move a graphic display origin depending on the graphic display area.

A coordinate system for generating graphic images is of 11 bits with signs, and has values ranging from - 1024 to + 1023 along each of X and Y axes. Since the frame buffer 63 has a size of 1024 × 512, any excess values are folded over. The origin of the coordinate system can freely be changed in the frame buffer 63 according to the offset indicating function. Graphic image data are generated and stored into an arbitrary rectangular area in the frame buffer 63 according to the graphic clipping function. The CPU 62 supports texture data of a maximum of 256 × 256 dots, whose horizontal and vertical values can freely be established.

Image data (texture pattern or sprite pattern) applied to polygons or sprites is stored in a non-display area of the frame buffer 63. A texture pattern or a sprite pattern comprises pages each of 256 × 256 pixels, and as many pages of a texture pattern or a sprite pattern as permissible by the storage capacity of the non-display area can be stored in the frame buffer 63. A storage capacity equal to 256 × 256 pixels in the frame buffer 63 is called a "texture page". The location of a texture page is determined by specifying a page number for a parameter in a graphic command for indicating a texture page location (address).

A texture pattern or a sprite pattern has three color modes including a 4-bit CLUT (4-bit mode), an 8-bit CLUT (8-bit mode), and a 16-bit CLUT (16-bit mode). A CLUT is used in the color modes of the 4-bit CLUT (4-bit mode) and the 8-bit CLUT (8-bit mode). The CLUT comprises 16 ∼ 256 R, G, B values, which are three primaries representing colors that will finally be displayed, arrayed in the frame buffer 63. The R, G, B values are numbered successively from the left in the frame buffer 63. The numbers allocated to the R, G, B values represent the colors of pixels of a texture pattern or a sprite pattern. A CLUT can be selected for each of polygons or sprites, and it is possible to provide independent CLUTs for all the polygons or sprites. The position where a CLUT is stored in the frame buffer 63 is determined by specifying a coordinate of the left end of the CLUT for a parameter in a graphic command for indicating a CLUT position (address).

The GPU 62 uses a technique known as "frame double buffering" for displaying moving images. According to the frame double buffering, two rectangular areas are used in the frame buffer 63, and while graphic image data is being generated and stored into one of the rectangular areas, graphic image data from the other rectangular area is displayed, and when the storage of the graphic image data is finished, the rectangular areas are switched around to display the stored graphic image data. Therefore, the switching between the graphic image data is prevented from being displayed. The switching between the rectangular areas of the frame buffer 63 is carried out in a vertical blanking period. Since the GPU 62 can freely establish the rectangular areas for storing graphic image data and the origin of the coordinate system, it is possible to achieve a plurality of buffer areas by moving the rectangular areas and the origin of the coordinate system.

Each of graphic commands comprises a packet which may be specified directly by the CPU 51 or directly by dedicated hardware. If dedicated hardware is used to directly specify a packet, then the packet is of an arrangement which comprises a command format used by the CPU 51, the number of command words, and a tag indicative of a pointer to a next command. Such a packet arrangement allows a plurality of commands, which are placed in contiguous areas in the frame buffer 63, to be connected and executed at once. Graphic commands of such a packet arrangement are transferred by the dedicated hardware, not the CPU 51.

Parameters included in graphic commands are as follows:
- CDDE:: Command code call option;
- R, G, B:: Luminance values shared by all vertices;
- Rn, Bn, Gn:: Luminance values of a vertex n;
- Xn, Yn:: Two-dimensional coordinates of a vertex n in a graphic space;
- Un, Vn:: Two-dimensional coordinates of a point in a texture source space which corresponds to a vertex n;
- CBA (CULT BASE ADDRESS):: Starting address of a CULT; and
- TSB (TEXTURE SOURCE BASE):: Starting address of a texture page and additional information of a texture type, etc.

For example, a triangle graphic command (command code = 1h) comprises a command code including an option, followed by vertex information given as a command argument. The number of arguments and the format vary depending on the option.

Parameters include:
- IIP:: Type of luminance values;
- SIZ:: Size of rectangular areas;
- CNT:: Vertex used;
- TME:: Whether there is texture mapping or not;
- ABE:: Whether there is semitransparent process or not; and
- TGE:: Whether there is multiplication of a texture pattern and luminance values.

For example, when IIP is 0, a triangle is graphically generated (flat shading) with one type of luminance values (R, G, B). When CNT is 0, a triangle is graphically generated with three vertices following the command, and joint triangles, i.e., a quadrangle, are graphically generated with four vertices following the command. When TME is 0, the texture mapping is turned off, and when TME is 1, the texture mapping is turned on. When ABE is 0, the semitransparent process is turned off, and when ABE is 1, the semitransparent process is turned on. The parameter TGE is effective only when the parameter TME is effective. When TGE is 0, a texture pattern and luminance values are multiplied and displayed. When TGE is 1, only a texture pattern is displayed.

A straight line graphic command (command code = 2h) comprises a command code including an option, followed by single-point information given as a command argument. The number of arguments and the format vary depending on the option. For example, when IIP is 0, a pixel is graphically generated with a luminance value that is specified, and when IIP is 1, luminance values of two vertices are linearly interpolated by displacing a line segment longitudinally and a pixel is graphically generated. When CNT is 0, a straight line is graphically generated with two end points following the command. When CNT is 1, joined straight lines are graphically generated. When ABE is 0, the semitransparent processing is turned off, and when ABE is 1, the semitransparent processing is turned on. When joined straight lines are to be graphically generated, a terminal end code indicative of the end of the command is required.

A sprite graphic command (command code = 3h) comprises a command code including an option, followed by luminance information, a left lower end point of a rectangular area, a left upper end point of a texture source space, a width and height of the rectangular area, which are given as command arguments. The number of arguments and the format vary depending on the option. Since the sprite graphic command processes two pixels simultaneously, a two-dimensional coordinate Un of a point in the texture source space which corresponds to a vertex n has to be set to an even number.

Therefore, one low-order bit is meaningless. When TME is 0, the texture mapping is turned off, and when TME is 1, the texture mapping is turned on. When ABE is 0, the semitransparent process is turned off, and when ABE is 1, the semitransparent process is turned on. When TGE (effective only when the parameter TME is effective) is 0, a texture pattern (sprite pattern) and certain luminance values are multiplied and displayed. When TGE is 1, only a texture pattern is displayed. When SIZ is 00, the size of a rectangular area is designated by H in 2 fields. When SIZ is 01, the size of a rectangular area is designated by 1 × 1. When SIZ is 10, the size of a rectangular area is designated by 8 × 3. When SIZ is 11, the size of a rectangular area is designated by 16 × 16.

It has been described above that a color information table, texture pattern information, semitransparency ratio designating data, etc. are stored as characteristic data indicated for each of polygons of images to be displayed in the frame buffer 63. However, these characteristic data may be stored in the main memory 53. In the game system according to the present embodiment, a certain area (hereinafter referred to as a "three-dimensional object image buffer area") is provided in the main memory 53, and the above characteristic data are stored in this three-dimensional object image buffer area.

In the illustrated embodiment, the video game program recorded in the CD-ROM 81 is a game program for carrying out a video action game in which in a game space that represents a certain region such as a building, a principal game character maneuverable by the game player moves to a certain position in the game space to perform a given mission, and then accomplishes the mission in the position, while eluding the vigilance of an enemy character controlled by the video game program and avoiding an attack delivered by the enemy character.

In the action game, a game image representing the game space including the principal game character is normally an image as viewed from such a viewpoint and in such a viewing direction that the principal game character is looked down upon from an obliquely upward point behind the principal game character (bird's eye view mode). When the game player presses a certain key of the manual controller 92, e.g., the first left button 92L1, the game image changes to a game image as viewed from a viewpoint placed in the present position of the principal game character in the game space and in a viewing direction aligned with the line of sight of the principal game character, and the game image is sustained insofar as the game player presses the first left button 92L1 (subjective mode). In the subjective mode, when the game player presses one of the cross keys, i.e., the left key L, the right key R, the up key U, or the down key D, the viewing direction for generating the game image changes depending on the pressed cross key. For example, when the game player presses the left key L, the viewing direction rotates to the left, and keeps rotating to the left insofar as the game player presses the left key L. Therefore, the game player is allowed to look around in the game space from the viewpoint of the principal game character. However, the principal game character cannot move in the game space in the subjective mode. Details of the above game image modes are disclosed in Japanese patent application No. 10-70991 filed by the present applicant.

In this embodiment, all objects positioned in the game space, including the principal game character, the enemy character, articles, and a background, are constructed of polygons, and data relative to the polygons of these objects are stored in the CD-ROM 81. It is possible to display a game image as viewed from an arbitrary viewpoint and in an arbitrary viewing direction by establishing such a viewpoint and a viewing direction. In the usual game processing, however, a viewpoint and a viewing direction are given by the video game program.

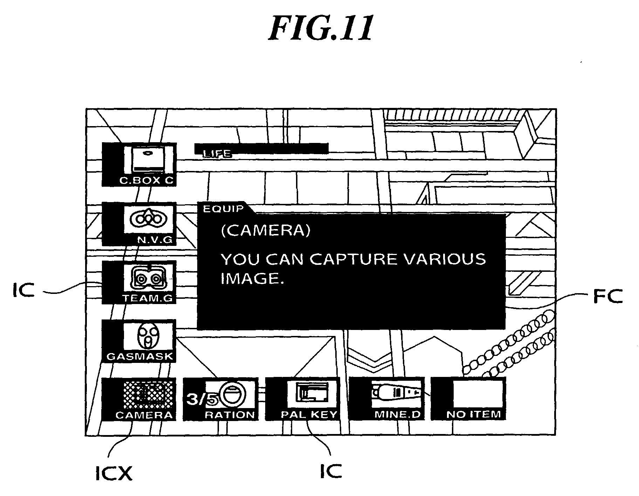

In the action game, the principal game character selects one of a plurality of items and can be equipped with the selected item. Those items include a protective gas mask, an infrared vision device, etc. For selecting an item, the game player presses a certain key of the manual controller 92, e.g., the second left button 92L2, whereupon an item selection image as shown in FIG. 11 is displayed. The displayed item selection image contains a list of selectable items displayed in an inverted L-shaped pattern extending in a left-side end and a lower end of the game image. When the game player presses the left key L or the right key R of the manual controller 92, the displayed items are successively scrolled. When the item that the game player wants to select is positioned in a lower left end of the game image, the game player releases the second left button 92L2. The item positioned in the lower left end of the game image is now selected, and the principal game character can be equipped with the selected item.

When the principal game character is equipped with the selected item, the principal game character can use the special capability of the selected item. When the game player presses a certain key of the manual controller 92, the special capability of the selected item is performed. For example, if the equipped item is an infrared vision device, then even when the game space is dark (as determined by colors designated when polygons are generated) and the principal game character is unable to see the surrounding space, the equipped infrared vision device enables the principal game character to view a forward area in the game image by making the game space brighter than the ordinary brightness setting only in a certain viewing direction corresponding to the forward direction of the principal game character. The items have different special capabilities, respectively.

One of the items that can be selected by the principal game character is a "camera". When the item "camera" is selected, the game image automatically changes to the subjective mode. The game player presses the cross keys L, R, U, D of the manual controller 92 to establish a desired viewing direction, and also presses the third and fourth buttons 92e, 92f to zoom in/out the game image. When a desired game image is displayed, the game player presses the first button 92c to compress the game image in a JPEG format and store the compressed game image in a memory card 93. The game image stored in the memory card 93 can be outputted to the video output unit 65 in an image playback mode when it is selected in a game mode selection image that is displayed when the action game is started. Details of the item "camera" will be described later on.

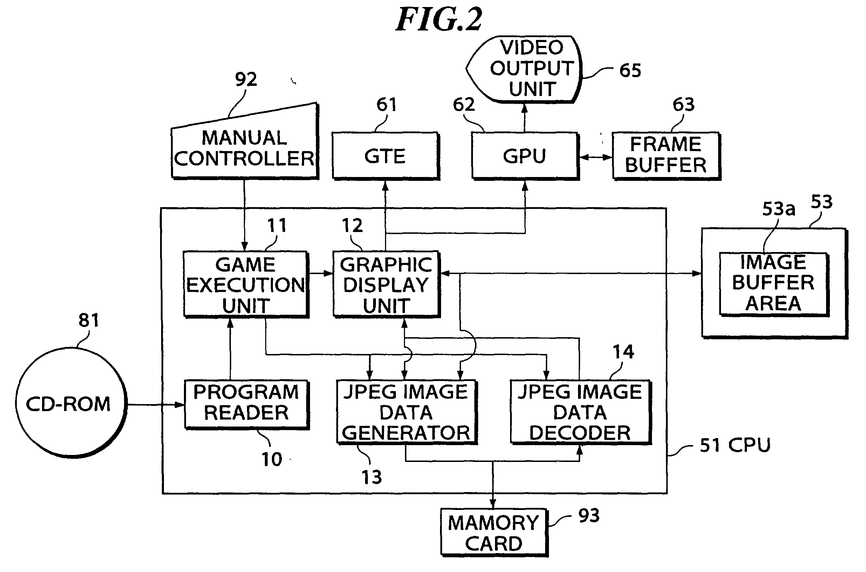

Functions that are provided by the CPU 51 when the game program for playing the action game is loaded from the CD-ROM 81 into the main memory 53 will be described below with reference to FIG. 2. In FIG. 2, of the components of the game system shown in FIG. 1, only the CPU 51, the main memory 53, the GTE 61, the GPU 62, the frame buffer 63, the video output unit 65, the memory card 93, the manual controller 92, and the CD-ROM 81 are shown, and other components are omitted from illustration.

As shown in FIG. 2, the functions that are provided by the CPU 51 include a program reader 10 for reading the game program from the CD-ROM 81 via the main memory 53, a game execution unit 11 for receiving and executing the game program read by the program reader 10 and receiving input information from the manual controller 92, a graphic display unit 12 for supplying data to generate game images based on results of the execution of the game program by the game execution unit 11 to the GTE 61 and the GPU 62, a JPEG image data generator 13 for generating JPEG data of game images and storing the JPEG data into the memory card 92 based on a command from the manual controller 92, and a JPEG image data decoder 14 for reading the JPEG image data from the memory card 93, converting the JPEG image data into image data that can be displayed on the game system, and supplying the data to the graphic display unit 12, based on a command from the manual controller 92.

The game execution unit 11 executes the game program received from the game reader 10, using input data from the manual controller 92 as parameters. When the game execution unit 11 executes the game program, the game system plays a video action game in which in a game space that represents a certain region such as a building, a principal game character maneuverable by the game player moves to a certain position in the game space to perform a given mission, and then accomplishes the mission in the position, while eluding the vigilance of an enemy character controlled by the game program and avoiding an attack delivered by the enemy character. At this time, the principal game character is moved depending on commands inputted from the manual controller 92.

The graphic display unit 12 is supplied with results of the execution of the game program, and carries out a process for displaying game images based on the results of the execution of the game program. In this embodiment, since all objects displayed in the game space are constructed of polygons, the graphic display unit 12 mainly performs a process of generating polygons.

When the game player presses a certain key of the manual controller 92 to save a game image while the item "camera" is being selected, the JPEG image data generator 13 writes game image data stored in the display area of the frame buffer 63 into the three-dimensional object image buffer area 53a in the main memory 53, and converts the game image data into image data in a JPEG format and stores the image data in the JPEG format into the memory card 93.

When the game player presses a certain key of the manual controller 92 in the image playback mode to playback a game image, the JPEG image data decoder 14 reads the JPEG format data from the memory card 93, decodes the JPEG format data into game image data, supplies the game image data to the graphic display unit 12, which displays a game image based on the game image data on the video output unit 65.

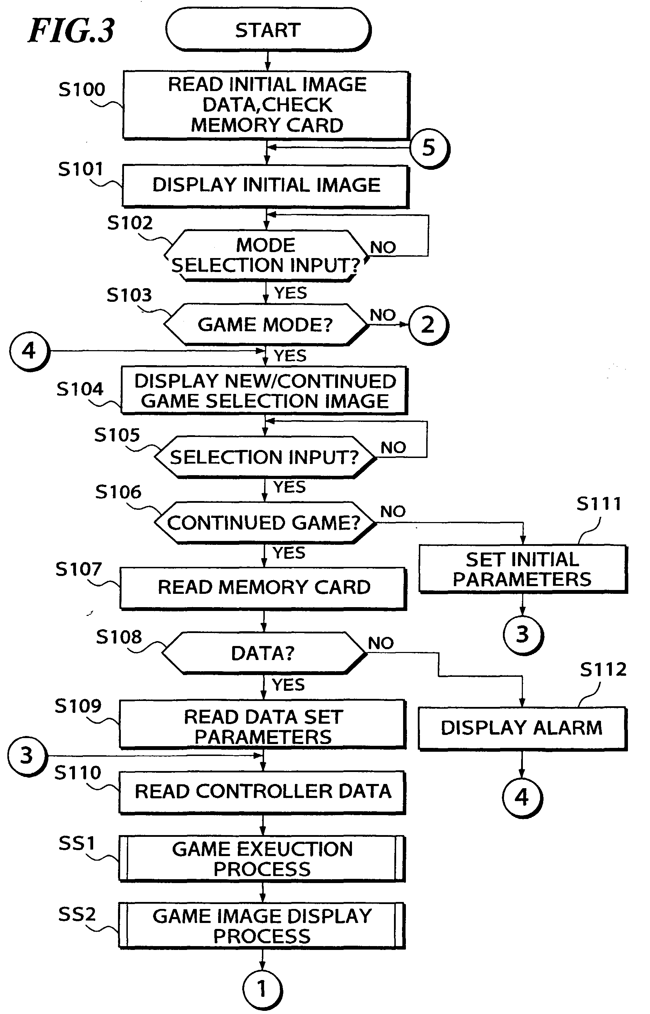

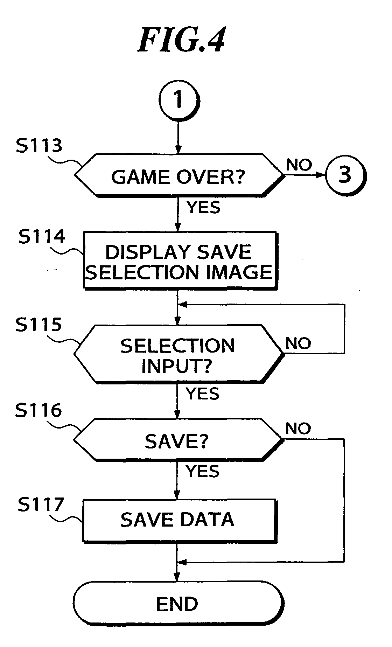

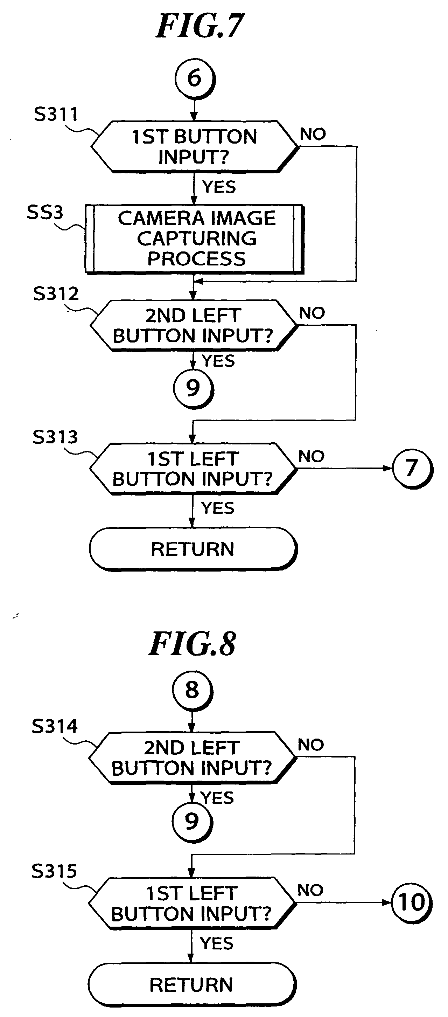

Operation of the game system according to the present invention will be described below with reference to FIGS. 3 through 9.

FIGS. 3 through 5 are a flowchart of an operation sequence of the game system. After the power supply of the game system is turned on, the CPU 51 executes the operating system stored in the ROM 54. When the operating system is executed, the CPU 51 initializes the game system in its entirety for confirming its operation, and thereafter controls the optical disk controller 80 to read the game program from the CD-ROM 81 into the main memory 53. The game program stored in the main memory 53 is then executed to perform the operation sequence shown in FIGS. 3 through 5. When the operation sequence shown in FIGS. 3 is performed, it enables the CPU 51 to provide the functions shown in FIG. 2.

The game execution unit 11 reads image data, etc. required to display an initial image from the CD-ROM 81, and checks if the memory card 93 is inserted in the game system or not in step S100. Then, the game execution unit 11 instructs the graphic display unit 12 to display the initial image. The graphic display unit 12 sends a command to display the initial image to the GPU 62. The GPU 62 generates image data of the initial image to be displayed when the action game is started, stores the generated image data in the frame buffer 63, and supplies the image data to the video output unit 65, which displays the initial image in step S101.

The displayed initial image contains an image for selecting various modes. The game player operates the cross keys of the manual controller 92 to move a cursor displayed in the initial image. When the cursor is moved to a mode to be selected, the game player presses a certain button of the manual controller 92 to select the mode (YES in step S102). Usually, a number of modes are selectably displayed in the initial image. However, for the sake of brevity, only a game mode for playing the action game and an image playback mode for playing back a game image will be described below, and other modes will be omitted.

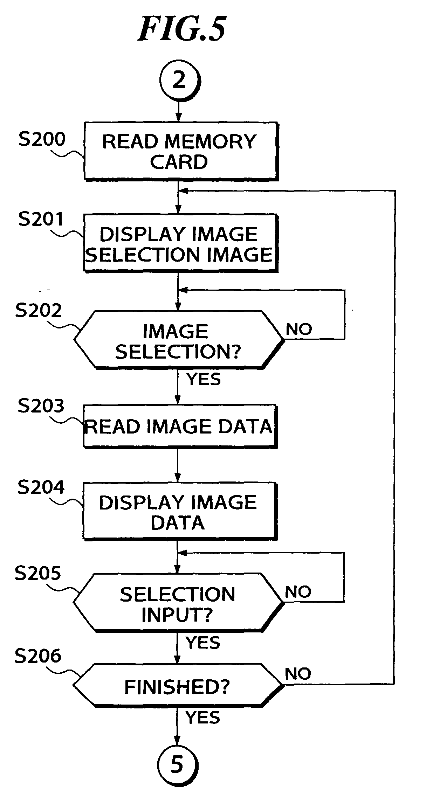

When a certain mode is selected by the game player, the game execution unit 11 decides which mode is selected based on the operation of the manual controller 92. If the game mode is selected (YES in step S103), then an operation sequence of the game mode from step S104 is executed. If the image playback mode is selected (NO in step S103), then an operation sequence of the image playback mode from step S200 shown in FIG. 5 is executed.

In the game mode, an image is displayed for the game player to select whether an action game is to be newly initiated based on instructions from the game execution unit 11 and the graphic display unit 12, or an action game is to be continued based on game data already stored in the memory card 93 in step S104. If the game player operates the manual controller 92 to select the new initiation or continuance of an action game (YES in step S105), then the game execution unit 11 decides which is selected based on the operation of the manual controller 92.

If an action game is to be continued (YES in step S106), then the game execution unit 11 reads the memory card 93 in step S107. The game execution unit 11 confirms whether game data are stored in the memory card 93 or not in step S108. If game data are stored in the memory card 93 (YES in step S108), then the game execution unit 11 stores the game data from the memory card 93 into a given area in the main memory 53, sets various parameters based on the game data, and stores the parameters into a given area in the main memory 53 in step S109.

If no game data are stored in the memory card 93 (NO in step S108), then the game execution unit 11 and the graphic display unit 12 generate commands to display an alarm image indicating that no game data are stored in the memory card 93 in step S112. Control then goes back to step S104.

If an action game is to be newly initiated (NO in step S106), then the game execution unit 11 places initial values in parameters to be used in the action game, and stores these parameters into a given area in the main memory 53 in step S111.

Subsequently, an ordinary game process is carried out by the game execution unit 11 and the graphic display unit 12. Specifically, when the game player operates the manual controller 92, data transmitted from the manual controller 92 are read in step S110, and the action game is executed according to a procedure defined by the game program based on the data received from the manual controller 92 in step SS1. Based on results of the execution of the action game, a process for displaying game images on the video output unit 65 is carried out in step SS2.

It is decided whether a condition to finish the action game is satisfied or not depending on the results of the execution of the action game in step S113. Until the action game is over (NO in step S113), the action game is continuously executed. Conditions to finish video games vary from video game to video game. In the action game according to the present invention, a condition to finish the action game may be satisfied when the life point of the principal game character is reduced to "0" due to an attack from the enemy character, or when a certain limit time for executing a command has elapsed.

When the game is over (YES in step S113), the game execution unit 11 and the graphic display unit 12 instruct the graphic processing unit 62 to display on the video output unit 65 an image for selecting whether results of the action game that has been executed are to be saved in the memory card 93 or not in step S114. If the game player selects whether results of the action game are to be saved in the memory card 93 or not (YES in step S115), then the game execution unit 11 decides which is selected, i.e., results of the action game are to be saved or not to be saved, based on the operation of the manual controller 92.

If results of the action game are to be saved in the memory card 93 (YES in step S116), then the game execution unit 11 stores the parameters from the main memory 53 directly or in numerical encrypted form into the memory card 93 in step S117. Thereafter, the execution of the action game is finished. If results of the action game are not to be saved in the memory card 93 (NO in step S116), then the execution of the action game is finished.

If the image playback mode is selected in the mode selection image (NO in step S103), then the image playback mode is executed as shown in FIG. 5.

The JPEG image data decoder 14 accesses the memory card 93 and reads index data of game image data from the memory card 93 in step S200. While details of the index data will be described later on, the index data are data for individually identifying game image data, such as titles of the game image data and serial numbers of the game image data.

Then, the JPEG image data decoder 14 controls the graphic display unit 12 to display an image for selecting which of the game image data is to be played back, using the index data read from the memory card 93 in step S201. If the game player operates the manual controller 92 to select one of the game image data to be played back (YES in step S202), then the JPEG image data decoder 14 decides the selected game image data based on the operation of the manual controller 92.

The JPEG image data decoder 14 reads the selected game image data from the memory card 93 in step S203, and controls the graphic display unit 12 to display the read game image data in step S204. Since the game image data stored in the memory card 93 have been compressed in JPEG file format (described in detail later on), the JPEG image data decoder 14 decodes the game image data read from the memory card 93 according to a JPEG routine. The decoding process, which will not be described in detail below, is essentially a reversal of a JPEG data compression process. While the game image is being played back, an image is simultaneously displayed for prompting the game player to play back next game image data or finish the image playback mode.

If the game player operates the manual controller 92 to select whether next game image data are to be played back or the image playback mode is to be finished (YES in step S205), then the JPEG image data decoder 14 decides whether next game image data are to be played back or the image playback mode is to be finished, based on the operation of the manual controller 92.

If the image playback mode is to be finished, the JPEG image data decoder 14 finishes the image playback mode (YES in step S206). If next game image data are to be played back (NO in step S206), then, the JPEG image data decoder 14 controls the graphic display unit 12 to display an image for selecting which of the game image data is to be played back in step S201.

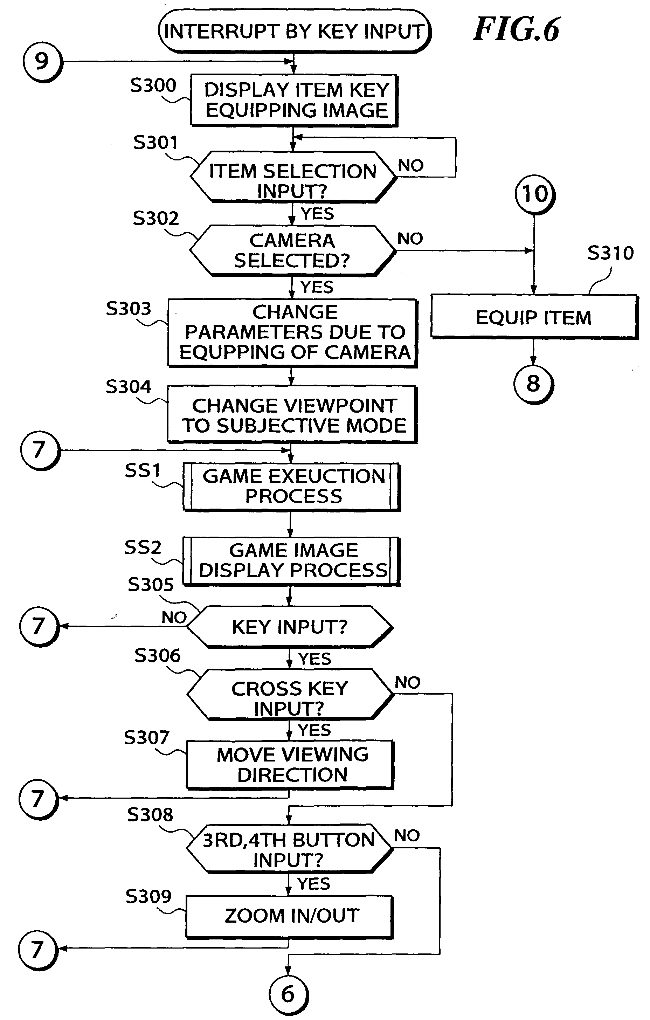

FIGS. 6 through 8 show a camera equipping process which is carried out by the game system when the item "camera" is selected by the game player. The camera equipping process starts the game player presses a certain key of the manual controller 92, e.g., the second left button 92L2, while the operation sequence shown in FIGS. 3 through 5 (steps S110 through S113) is being executed.

The game execution unit 11 and the graphic display unit 12 instruct the graphic processing unit 62 to display an item selection image on the video output unit 65 in step S300. The item selection image is shown in FIG. 11. The displayed item selection image contains a plurality of icons IC representing selectable items displayed in an inverted L-shaped pattern extending in a left-side end and a lower end of the game image. An icon ICX displayed in a lower left end of the game image represents an item whose function is specifically displayed as an image FC in the game image.

If the game player operates the manual controller 92 to select one of the displayed items (YES in step S301), the game execution unit 11 decides which item has been selected based on the operation of the manual controller 92. As described above, the game player selects an item as follows: When the game player presses the left key L or the right key R of the manual controller 92 while the item selection image shown in FIG. 11 is being displayed by the game player pressing the second left button 92L2, the displayed icons are successively scrolled. When the icon representing the item that the game player wants to select is positioned (as the icon ICX) in the lower left end of the game image, the game player releases the second left button 92L2. The item positioned in the lower left end of the game image is now selected, and the principal game character is equipped with the selected item.

If the item "camera" is selected (YES in step S302), control goes to step S303 and subsequent steps for a camera equipping process. If another item is selected (NO in step S302), then the selected other item is equipped in step S310. As shown in FIG. 11, the principal game character can be equipped with a number of items other than the item "camera". For the sake of brevity, however, detailed functions of the other items than the item "camera" will not be described below.

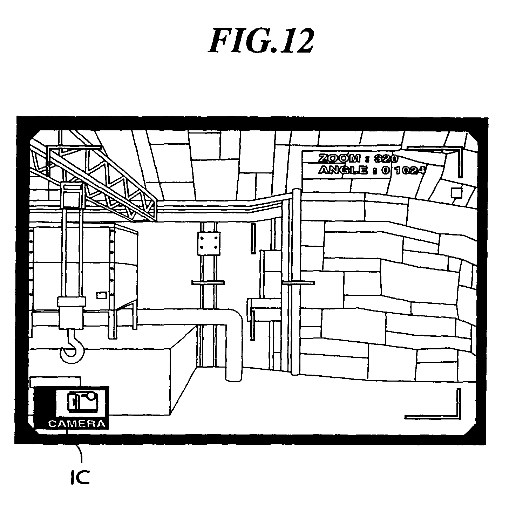

In the camera equipping process, the game execution unit 11 changes parameters due to the eqipping of the item "camera" in step S303. Then, the game image changes to a game image in which the viewpoint and the viewing direction are placed in the subjective mode, i.e., the viewpoint is placed in the present position of the principal game character in the game space and the viewing direction is aligned with the line of sight of the principal game character, in step S304. A game image that is displayed when the item "camera" is selected and the game image mode changes to the subjective mode is shown by way of example in FIG. 12. In the game image, the icon IC representing the selected item "camera" is displayed in the lower left end.

The game execution unit 11 executes the action game according to the procedure defined by the game program in step SS1, and the graphic display unit 12 carries out a process for displaying game images on the video output unit 65 based on results of the execution of the action game in step SS2. The processing in steps SS1, SS2 is continued until the game player operates the manual controller 92. Therefore, the usual game processing is continuously performed even when the principal game character is equipped with the item "camera". In the subjective mode, however, since the principal game character cannot move in the game space, the principal game character stands still at the time it is equipped with the item "camera".

If the game player presses a key of the manual controller 92 to cause the manual controller 92 to produce a signal (YES in step S305), then the game execution unit 11 decides which key has been pressed, and performs a process based on the pressed key.

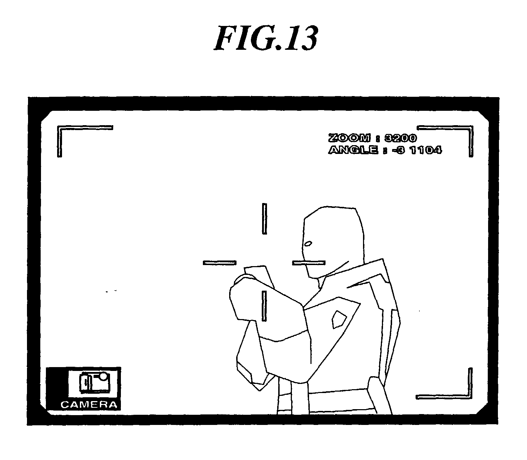

If the game player presses one of the cross keys L, R, U, D of the manual controller 92 (YES in step S306), then the game execution unit 11 changes the viewing direction to generate a game image depending on the pressed cross key in step S307. For example, if the game player presses the left key L, then the viewing direction rotates to the left for the period of time in which the left key L is pressed. The game player is thus allowed to look around in the game image from the viewpoint of the principal game character. FIG. 13 shows by way of example a game image that is displayed when the viewing direction is changed by one of the cross keys.

If the game player presses the third button 92e or the fourth button 92f of the manual controller 92 (YES in step S308), then the game execution unit 11 zooms in/out the game image in step S309. Specifically, the game execution unit 11 moves the viewpoint forward or backward along the viewing direction, or increases or reduces the display area for the game image that is stored in the frame buffer 63.

After the viewpoint and the viewing direction have been changed by the cross keys and the third and fourth buttons, the usual game processing is carried out. Consequently, it is possible for the game player to change the game image as desired while the action game is being executed.

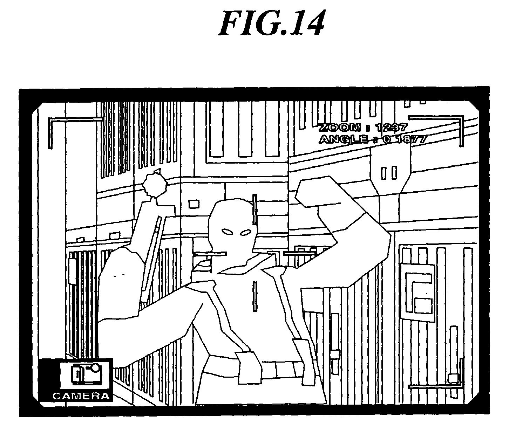

If the game player presses the first button 92c of the manual controller 92 (YES in step S311), then the JPEG image data generator 13 performs a camera image capturing process for storing a game image in the memory card 93 in step SS3. Specifically, when a desired game image is displayed, the game player presses the first button 92c, and the game image is stored in the memory card 93. FIG. 14 shows by way of example a game image that is displayed when the game player presses the first button 92c. The camera image capturing process will be described in detail later on.

If the game player presses the second left button 92L2 of the manual controller 92 (YES in step S312), then the item selection image shown in FIG. 11 is displayed in step S300 for the game player to select one of the items again.

If the game player presses the first left button 92L1 of the manual controller 92 (YES in step S313), then the camera equipping process shown in FIGS. 6 through 8 is finished, and control returns to the game processing (steps S110 through S113).

If the game player presses other buttons than the cross keys, the first, third, and fourth buttons, and the first and second left buttons (NO in step S313), then control goes back to the usual game processing.

When an item other than the item "camera is selected, if the game player presses the second left button 92L2 of the manual controller 92 (YES in step S314) after the item equipping process, then the item selection image shown in FIG. 11 is displayed in step S300 for the game player to select one of the items again.

If the game player presses the first left button 92L1 of the manual controller 92 (YES in step S315), then the camera equipping process shown in FIGS. 6 through 8 is finished, and control returns to the game processing (steps S110 through S113).

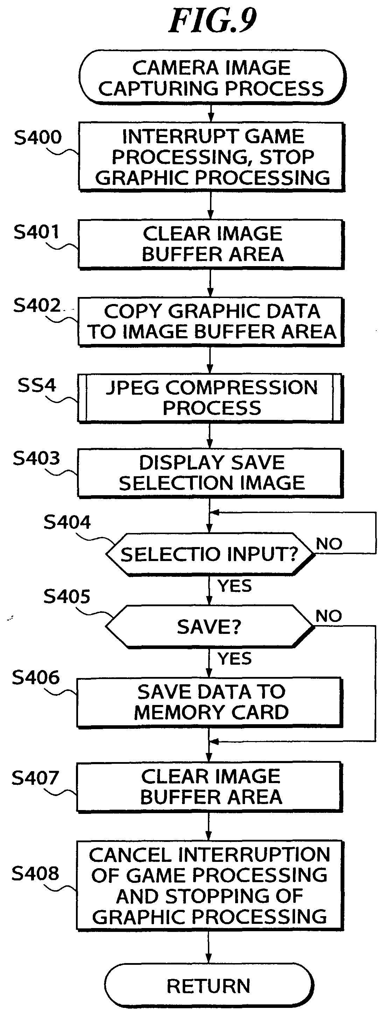

FIG. 9 shows the camera image capturing process in step SS3.

The JPEG image data generator 13 interrupts the game processing carried out by the game execution unit 11, and stops the graphic processing carried out by the graphic display unit 12 in step S400. The frame buffer 63 now holds the image data of the game image before the camera image capturing process is started.

Then, the JPEG image data generator 13 clears the data stored in the three-dimensional object image buffer area 53a in the main memory 53 in step S401. The three-dimensional object image buffer area 53a is an area for storing the coordinates of vertexes of polygons while a game image is being generated. Once the generation of a game image is stopped, the three-dimensional object image buffer area 53a may be used for other purposes, e.g., for storing game image data.

The JPEG image data generator 13 copies the image data of one frame stored in a display area of the frame buffer 63, more precisely the image data of the game image displayed on the video output unit 65 at the time, partly to the three-dimensional object image buffer area 53a in step S402, and compresses the image data copied into the three-dimensional object image buffer area 53a according to the JPEG routine in step S4. The JPEG compression process will be described in detail later on.

When, the JPEG compression process is finished, the JPEG image data generator 13 displays an image for selecting whether the compressed image data are to be stored in the memory card 93 or not in step S403. If the game player operates the manual controller 92 to select whether the compressed image data are to be stored or not (YES in step S404), then the JPEG image data generator 13 decides whether the compressed image data are to be stored or not based on the operation of the manual controller 92.

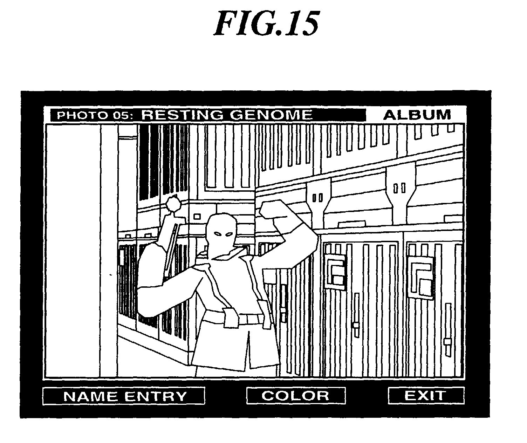

If the compressed image data are to be stored (YES in step S405), then the JPEG image data generator 13 stores the compressed image data into the memory card 93 in step S406. At this time, as shown in FIG. 15, the game player may be prompted to enter the name of the image data for identifying the image data. When the image data are stored in the memory card 93, the index data including the entered name of the image data, the serial number of the image data, etc. are simultaneously stored in the memory card 93. If the compressed image data are not to be stored (NO in step S405), then the compressed image data are not stored, and control jumps to step S407.

The JPEG image data generator 13 clears the data stored in the three-dimensional object image buffer area 53a in step S407, and cancels the interruption of the game processing carried out by the game execution unit 11, and cancels the stopping of the graphic processing carried out by the graphic display unit 12 in step S408.

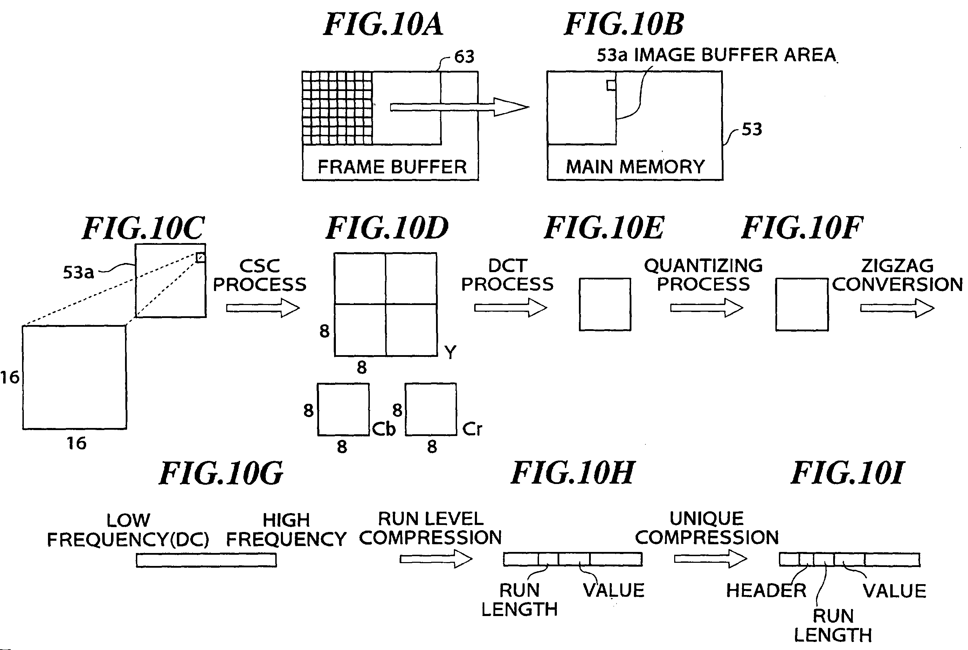

FIGS. 10(a) through 10(i) are illustrative of the JPEG compression process carried out in step SS4 shown in FIG. 9. The JPEG compression process will be described below with reference to FIGS. 10(a) through 10(i). For illustrative purposes, other processing than the JPEG compression process carried out in step SS4 is also described with reference to FIGS. 10(a) through 10(i). The JPEG compression process itself is well known in the art, and detailed principles of the JPEG compression process are omitted from the following description:

Image data of one frame stored in one of the display areas of the frame buffer 63 is copied to the three-dimensional object image buffer area 53a of the main memory 53 (see FIG. 10(a)). At this time, the image data of one frame is not copied all at once to the three-dimensional object image buffer area 53a, but copied in small segments of 16 × 16 dots to the three-dimensional object image buffer area 53a. Therefore, the storage capacity of the three-dimensional object image buffer area 53a which is required for the JPEG compression process can be reduced. Of course, if the three-dimensional object image buffer area 53a has a sufficiently large storage capacity, then the image data of one frame may be copied all at once to the three-dimensional object image buffer area 53a. Then, the small segments of the image data copied to the three-dimensional object image buffer area 53a are successively subjected to the JPEG compression process (see FIG. 10(b)).

In the JPEG compression process, RGB information of a small segment of the image data is extracted, and then converted by CSC (Color Space Conversion) into luminance (Y) and color difference (Cb, Cr) components (see FIG. 10(c)). Of the luminance and color difference components, the color difference components are not required to have higher resolution than the luminance component. Therefore, as shown in FIG. 10(d), each of the color difference components is compressed to a data size which is vertically and horizontally one half of their original data size. While the color difference components may compressed by any arbitrary process, they may be compressed by collecting every other points of their data or calculating an arithmetic mean of four points that are vertically and horizontally adjacent to each other, for example.

The luminance component is divided vertically and horizontally into four parts. As a result, a total of 6 blocks each of 8 × 8 dots are obtained from a small segment of 16 × 16 dots. Each of the blocks is then subjected to DCT (Discrete Cosine Transform), as shown in FIG. 10(d), and then quantized at different resolutions for the luminance and color difference components, as shown in FIG. 10(e). The blocks which have been processed by the DCT and quantization contain low-frequency (DC) through high-frequency components arranged in a zigzag pattern from a lower left region to a lower right region. A zigzag conversion process is effected to pick up those components successively from the low-frequency components, as shown in FIG. 10(f). Usually, since general natural images have (spatial) frequency components concentrated in a low-frequency range, the rear part of the data sequence contains no components due to the zigzag conversion process (almost no components result from the quantization), the compression ratio of a next run-level compression process will be increased.

Then, a run-level compression process is carried out on the zigzag-converted data sequence, as shown in FIG. 10(g). The data that has been subjected to the run-level compression process has units of run lengths and quantized DCT coefficient values. According to the usual JPEG compression technique, the data would be encoded by VLC (Variable Length Coding) based on the principles of the Huffman encoding. According to this embodiment, however, a unique compression algorithm based on empirically obtained results representative of localized DCT coefficient values which have been quantized is employed (see FIG. 10(h).

If the run lengths are 6 or shorter and the DCT coefficient values are in the range from - 8 to 6, then the run lengths can be expressed by 3 bits and the DCT coefficient values by 4 bits. It has empirically been recognized that most of the compressed data of game images according to the embodiment have their DCT coefficient values kept in the above range. The data which satisfy the above conditions are converted into a data format: 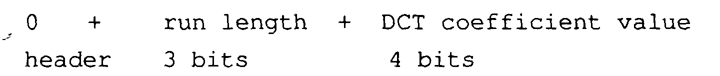 and other data are converted into a data format: 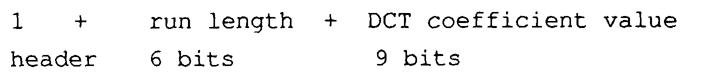 (see FIG. 10(i)). Consequently, the amount of data can be made smaller than if the run lengths and the DCT coefficient values were stored in a fixed-length format. As an exception to the header 0, 0111 (binary number) corresponds to a marker 0xFE00 (hexadecimal number) indicative of a block division in the run length format.

In the game system according to the present embodiment, when the item "camera" is equipped, a game image desired by the game player can be compressed by the JPEG compression process and stored in the memory card. The game image stored in the memory card can be played back when desired by the game player.

Although a certain preferred embodiment of the present invention has been shown and described in detail, it should be understood that various changes and modifications may be made therein without departing from the scope of the appended claims.

## Claims

1. A game system comprising:
manual control input means for producing a control signal in response to a manual control input from a game player;
image generating means for generating a game image which represents a game space based on said control signal and/or a predetermined sequence, and a principal game character maneuverable in said game space based on said control signal so as to select and be equipped with an item in said game space; and
game image writing means for recording image data of the game image in an external storage medium based on said control signal when said principal game character is equipped with a predetermined item.

2. A game system according to claim 1, wherein said external storage medium comprises a nonvolatile recording medium.

3. A game system according to claim 1, wherein said external storage medium is removably connected to said game image writing means.

4. A game system according to claim 1, further comprising:
viewpoint setting means for determining a viewpoint and/or a viewing direction within said game space to generate said game image based on said control signal;
said image generating means comprising means for generating said game image as viewed from said viewpoint and/or in said viewing direction determined by said viewpoint setting means; and
said game image writing means comprising means for recording image data of the game image as viewed from said viewpoint and/or in said viewing direction determined by said viewpoint setting means, in said external storage medium.

5. A game system according to claim 1, further comprising:
viewpoint setting means for determining a viewpoint at the present position of said principal game character in the game space and a viewing direction aligned with the line of sight of said principal game character based on said control signal;
said image generating means comprising means for generating a game image as viewed from said viewpoint and in said viewing direction determined by said viewpoint setting means; and
said game image writing means comprising means for recording image data of the game image as viewed from said viewpoint and in said viewing direction determined by said viewpoint setting means, in said external storage medium.

6. A game system according to claim 4, further comprising:
object data memory means for storing an object to be displayed in said game space, as polygons;
said image generating means comprising means for placing said object stored by said object data memory means in a given position in said game space based on said control signal and/or the predetermined sequence, and generating a pseudo-two-dimensional game image representing a game space as viewed from said viewpoint and/or in said viewing direction determined by said viewpoint setting means.

7. A game system according to claim 1, wherein said game image writing means comprises:
data compressing means for compressing image data of the game image; and
means for writing the image data compressed by said data compressing means in said external storage medium.

8. A game system according to claim 7, wherein said data compressing means comprises:
means for compressing the image data of the game image according to a JPEG compression process.

9. A game system according to claim 1, wherein said game image writing means comprises:
means for recording still image data of said game image in said external storage medium when the control signal is produced from said manual control input means.

10. A game system according to claim 1, wherein said game image writing means comprises:
means for recording index data for identifying the image data of the game image in relation to the image data in the external storage medium.

11. A game system according to claim 10, wherein at least a portion of said index data is generated by said control signal.

12. A game system comprising:
manual control input means for producing a control signal in response to a manual control input from a game player;
image generating means for generating a game image which represents a game space based on at least one of said control signal and a predetermined sequence, and a principal game character maneuverable in said game space based on said control signal so as to select and be equipped with an item in said game space;
display means for displaying the game image generated by said image generating means;
game image writing means for recording image data of the game image in a storage medium based on said control signal when said principal game character is equipped with a predetermined item; and
game image playback means for displaying the image data recorded in said storage medium on said display means based on said control signal.

13. A game system according to claim 12, wherein said storage medium comprises an external storage medium removably connected to said game image writing means.

14. A game system according to claim 13, wherein said external storage medium comprises a nonvolatile recording medium.

15. A game system according to claim 12, further comprising:
viewpoint setting means for determining a viewpoint and/or a viewing direction within said game space to generate said game image based on said control signal;
said image generating means comprising means for generating said game image as viewed from said viewpoint and/or in said viewing direction determined by said viewpoint setting means; and
said game image writing means comprising means for recording image data of the game image as viewed from said viewpoint and/or in said viewing direction determined by said viewpoint setting means, in said storage medium.

16. A game system according to claim 12, further comprising:
viewpoint setting means for determining a viewpoint at the present position of said principal game character in the game space and a viewing direction aligned with the line of sight of said principal game character based on said control signal;
said image generating means comprising means for generating a game image as viewed from said viewpoint and in said viewing direction determined by said viewpoint setting means; and
said game image writing means comprising means for recording image data of the game image as viewed from said viewpoint and in said viewing direction determined by said viewpoint setting means, in said storage medium.

17. A method of saving an image in a game system having manual control input means for producing a control signal in response to a manual control input from a game player, and image generating means for generating a game image which represents a game space based on said control signal and/or a predetermined sequence, and a principal game character maneuverable in said game space based on said control signal so as to select and be equipped with an item in said game space, said method comprising the step of:
recording image data of the game image in an external storage medium based on said control signal when said principal game character is equipped with a predetermined item.

18. A method according to claim 17, further comprising the steps of:
determining a viewpoint and/or a viewing direction within said game space to generate said game image based on said control signal;
generating said game image as viewed from said viewpoint and/or in said viewing direction; and
recording image data of the game image as viewed from said viewpoint and/or in said viewing direction in said external storage medium.

19. A method according to claim 17, further comprising the steps of:
determining a viewpoint at the present position of said principal game character in the game space and a viewing direction aligned with the line of sight of said principal game character based on said control signal;
generating a game image as viewed from said viewpoint and in said viewing direction; and
recording image data of the game image as viewed from said viewpoint and in said viewing direction in said external storage medium.

20. A recording medium which stores a game program for use in a game system having manual control input means for producing a control signal in response to a manual control input from a game player, and image generating means for generating a game image which represents a game space based on said control signal and/or a predetermined sequence, and a principal game character maneuverable in said game space based on said control signal so as to select and be equipped with an item in said game space, wherein when said game program is read by said game system, said game program enables said game system to record image data of the game image in an external storage medium based on said control signal when said principal game character is equipped with a predetermined item.

21. A recording medium according to claim 20, wherein said game program enables said game system to determine a viewpoint and/or a viewing direction within said game space to generate said game image based on said control signal, generate said game image as viewed from said viewpoint and/or in said viewing direction, and record image data of the game image as viewed from said viewpoint and/or in said viewing direction in said external storage medium.

22. A recording medium according to claim 20, wherein said game program enables said game system to determine a viewpoint at the present position of said principal game character in the game space and a viewing direction aligned with the line of sight of said principal game character based on said control signal, generate a game image as viewed from said viewpoint and in said viewing direction, and record image data of the game image as viewed from said viewpoint and in said viewing direction in said external storage medium.

23. A game system comprising:
manual control input means for producing a control signal in response to a manual control input from a game player;
image generating means for generating a game image which represents a game space based on said control signal and/or a predetermined sequence, and a principal game character maneuverable in said game space based on said control signal;
viewpoint setting means for determining a viewpoint at the present position of said principal game character in the game space and a viewing direction aligned with the line of sight of said principal game character based on said control signal;
said image generating means comprising means for generating a game image as viewed from said viewpoint and in said viewing direction determined by said viewpoint setting means; and
game image writing means for recording image data of the game image as viewed from said viewpoint and in said viewing direction determined by said viewpoint setting means in an external storage medium based on said control signal.

24. A game system comprising:
manual control input means for producing a control signal in response to a manual control input from a game player;
image generating means for generating a game image which represents a game space based on said control signal and/or a predetermined sequence, and a principal game character maneuverable in said game space based on said control signal;
display means for displaying the game image generated by said image generating means;
viewpoint setting means for determining a viewpoint at the present position of said principal game character in the game space and a viewing direction aligned with the line of sight of said principal game character based on said control signal;
said image generating means comprising means for generating a game image as viewed from said viewpoint and in said viewing direction determined by said viewpoint setting means;
game image writing means for recording image data of the game image as viewed from said viewpoint and in said viewing direction determined by said viewpoint setting means in a storage medium based on said control signal; and
game image playback means for displaying the image data recorded in said storage medium on said display means based on said control signal.

25. A method of saving an image in a game system having manual control input means for producing a control signal in response to a manual control input from a game player, and image generating means for generating a game image which represents a game space based on said control signal and/or a predetermined sequence, and a principal game character maneuverable in said game space based on said control signal, said method comprising the steps of:
determining a viewpoint at the present position of said principal game character in the game space and a viewing direction aligned with the line of sight of said principal game character based on said control signal;
generating a game image as viewed from said viewpoint and in said viewing direction; and
recording image data of the game image as viewed from said viewpoint and in said viewing direction in an external storage medium based on said control signal.

26. A recording medium which stores a game program for use in a game system having manual control input means for producing a control signal in response to a manual control input from a game player, and image generating means for generating a game image which represents a game space based on said control signal and/or a predetermined sequence, and a principal game character maneuverable in said game space based on said control signal, wherein when said game program is read by said game system, said game program enables said game system to determine a viewpoint at the present position of said principal game character in the game space and a viewing direction aligned with the line of sight of said principal game character based on said control signal, generate a game image as viewed from said viewpoint and in said viewing direction, and record image data of the game image as viewed from said viewpoint and in said viewing direction in an external storage medium.
